# FASCICULE DE BREVET EUROPEEN

(11) **EP 0 505 229 B1**
(45) Date de publication et mention de la délivrance du brevet: **17.05.1995**
(21) Numéro de dépôt: 92400584.6
(22) Date de dépôt: 06.03.1992
(51) Int. Cl.: B60N 2/22

(54) **Mécanisme à train hypocycloidal pour siège de véhicule comportant un frein anti-réversible à couple différentiel**
Hypozykloidischer Getriebemechanismus für Fahrzeugsitze mit einer nichtumkehrbaren Bremse mit differentialem Moment
Hypocycloidal train mechanism for a vehicle seat, including a brake with anti-reversing properties and differential torque

(30) Priorité: 19.03.1991 FR 9103322
(43) Date de publication de la demande: 23.09.1992
(73) Titulaire: BERTRAND FAURE AUTOMOBILE "B.F.A.", F-91300 Massy (FR)
(72) Inventeur: Reubeuze, Yann, F-61100 Flers (FR)
(74) Mandataire: Madeuf, René Louis

(56) Documents cités:
- EP-A- 0 099 549
- EP-A- 0 406 089
- WO-A-80/02677
- DE-A- 3 819 346
- FR-A- 2 398 635
- FR-A- 2 601 571

## Description

On utilise des mécanismes réducteurs à train hypocycloïdal dans les sièges de véhicule pour régler, soit l'assise, soit l'inclinaison du dossier afin de mettre le siège dans une position qui correspond au mieux à la morphologie du passager.

Mais ces mécanismes, malgré le soin apporté à leur fabrication, comportent des jeux entre dentures, d'une part, des flasques fixes et mobiles et, d'autre part, du satellite double entraîné par une came, ce qui provoque des à-coups lors du fonctionnement de ces mécanismes, et ces mouvements provoquent très rapidement des sensations désagréables pour le passager utilisant le siège. Après examen, il apparaît que le satellite a un mouvement de bascule et tourne donc par saccades plus vite que la came.

Le WO-A-80/02677 montre bien un dispositif réducteur comportant deux demi-cames avec interposition d'un ressort (ressort à double spire), mais il s'agit ici de réduire le jeu entre came et satellite ce qui n'est pas le but recherché dans la présente invention.

Le EP-A-0 099 549 montre, pour éviter la réversibilité, la mise en place d'un tampon souple entre le bouton de manoeuvre de l'articulation, c'est-à-dire la came et une cavité dans le flasque mobile du dossier du siège. Outre qu'il est nécessaire ici d'avoir une intervention directe de la main humaine, cet organe n'assure pas un freinage réel du mécanisme car, tout au plus, la came est légèrement freinée.

Conformément à l'invention, le mécanisme à train hypocycloïdal pour siège comportant un frein anti-réversible à couple différentiel dans lequel il est prévu, devant le roulement à billes logé entre, d'une part, le satellite double et, d'autre part, la came de commande, sur la face tournée vers le flasque mobile de ce roulement à billes, un ressort annulaire, est caractérisé en ce que ce ressort à section semi-circulaire comporte une de ses extrémités recourbées qui est accrochée dans une alvéole de la came créée sur l'un des axes de centrage du mécanisme à train hypocycloïdal tandis que l'autre extrémité extérieure du ressort est libre de façon que, lors de la rotation du mécanisme dans le sens de la descente ou de la remontée du dossier du siège, il se produise un frottement de l'extrémité extérieure du ressort contre la partie interne du satellite en assurant ainsi une rotation continue sans à-coups provoquant une vitesse de rotation constante du flasque mobile.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est un plan d'un mécanisme à train hypocycloïdal, partie en coupe, suivant la ligne I-I de la fig. 2, muni du frein anti-réversible.

La fig. 2 est une coupe diamétrale de ce mécanisme.

Les fig. 3, 4 et 5 sont, respectivement, un plan, une coupe diagonale et un schéma de fonctionnement du ressort anti-réversible.

Les fig. 6 et 7 sont des plans montrant le fonctionnement du dispositif.

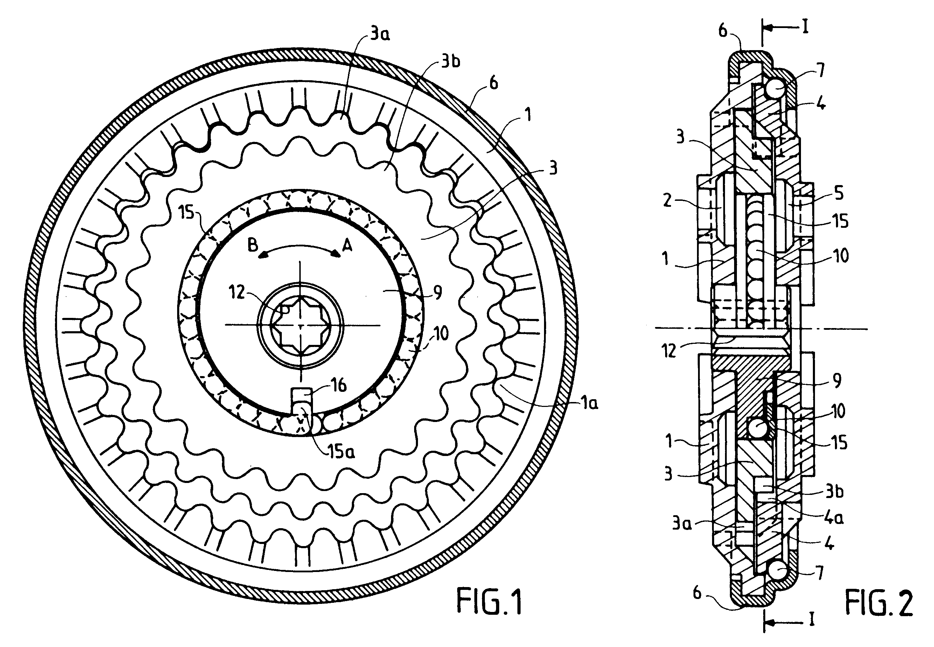

Lorsqu'on examine les fig. 1 et 2, on constate que le mécanisme se compose d'un flasque fixe 1 solidaire, par exemple pour l'utilisation sur un siège, de l'assise de celui-ci au moyen de dispositifs de fixation placé dans les alvéoles 2. Ces dispositifs sont en général au nombre de trois disposés à 120° les uns des autres.

Le flasque 1 contient intérieurement un satellite double 3 dont une denture 3a coopère avec la denture 1a du satellite fixe 1 tandis que la denture 3b coopère avec la denture 4a du flasque mobile 4. Ce dernier est relié à l'armature du dossier par des dispositifs de fixation logés dans les alvéoles 5 disposées elles aussi à 120° les unes des autres.

Le maintien du flasque mobile 4 sur le flasque fixe 1 s'effectue au moyen d'une bague sertie 6 solidaire du flasque fixe 1 et qui contient un roulement à billes 7 interposé entre le flasque mobile 4 et la bague sertie 6.

Finalement, le satellite 3 est monté sur une came 9 avec interposition entre le satellite double 3 et la came 9 d'un roulement à billes 10. La rotation de la came 9 se fait par l'intermédiaire d'un arbre, non représenté, présentant des cannelures coopérent avec les cannelures 12 de la partie évidée de la came 9. Le mécanisme décrit ci-dessus est un réducteur à train hypocycloïdal pouvant être réversible ou partiellement réversible.

Lorsqu'on entraîne en rotation le dispositif, par l'intermédiaire de l'arbre de commande présentant des cannelures coopérant avec les cannelures 12, le satellite double 3 provoque, par ses dentures 3a, 3b, en roulant sur la denture fixe 1a du satellite fixe 1, une réaction et donc, par la denture 4a, la rotation du flasque mobile 4 qui est relié à l'armature du dossier du siège comme cela a été dit précédemment.

Mais, du fait de légères imprécisions dans la réalisation des dentures 1a du flasque fixe 1, de la denture 4a du flasque mobile 4 et des dentures 3a, 3b du satellite double 3, il se produit des points durs donnant une résistance importante sur l'arbre de commande du mécanisme, ce qui a pour effet, lorsque le mécanisme est entrainé dans le sens de l'abaissement ou du relèvement du dossier, de provoquer par réaction sur la came 9, une tension sur un ressort annulaire 15 qui a, en section, une forme semi-circulaire.

Le ressort annulaire 15 permet de pallier les différences de valeurs d'effort sur les cannelures 12 de l'arbre de commande ainsi que sur le basculement du satellite double 3, en rattrapant les jeux angulaires entre la came de commande 9 et le satellite double 3.

A cet effet, le ressort 15 qui est de forme symétrique à l'état de pièce primaire présente une extrémité 15a engagée dans une alvéole 16 de la came 9 de façon à ce que, lorsque ce ressort est bandé, il freine le mouvement de rotation, en frottant par son extrémité extérieure 15b contre la partie interne du satellite 3, en régularisant ainsi le mouvement de la came et, de ce fait, le mouvement du mécanisme.

On assure ainsi un fonctionnement continu, sans à-coups du mécanisme tant pour l'abaissement que pour le relevage du dossier, le flasque mobile 4a tourne alors à une vitesse de rotation constante.

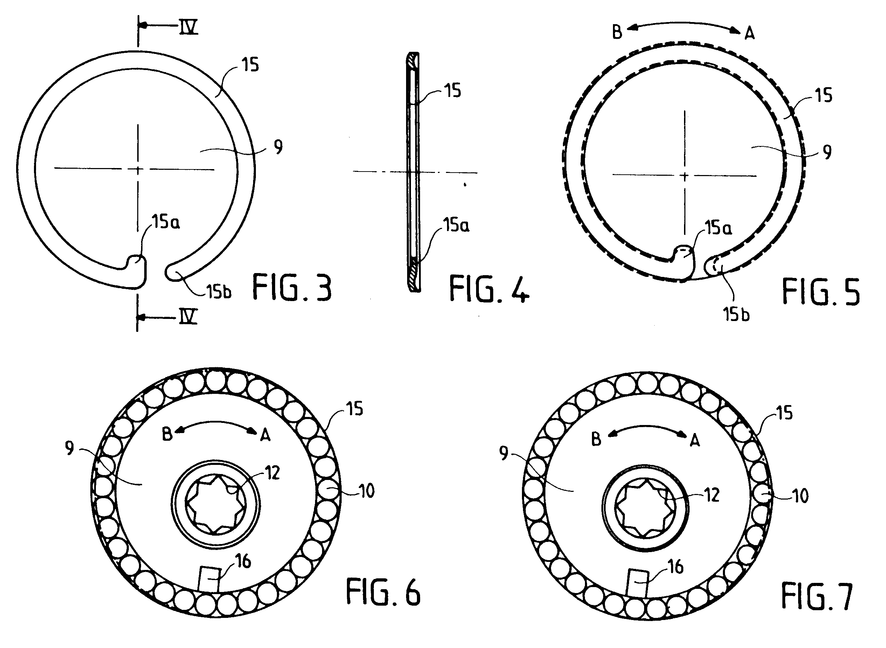

Dans le sens A (voir flèche fig. 5) le couple est plus fort car l'extrémité 15b du ressort 15 s'arc-boute dans le satellite 3 du fait de la poussée par la lumière 16 sur l'extrémité courbée 15a du ressort 15. Dans le sens B la lumière 16 entraîne l'extrémité courbée 15a du ressort 15 et, de ce fait, a tendance à réduire la surface et la pression du ressort 15 dans le satellite 3 diminuant la valeur du couple. L'assemblage des pièces étant symétrique, la rotation dans le sens B n'est utilisée que dans le sens de relevage du dossier par rapport à l'assise. La rotation dans le sens A, de par un frottement plus important entre le ressort 15 et le satellite 3 par extension du ressort 15 et le freinage, évite les à-coups lors de la descente du dossier. Le fait que l'entraînement du satellite 3 se fasse par la denture 4a du flasque mobile 4 provoque l'entrainement de l'extrémité 15b du ressort 15. Ainsi un blocage intervient entre le satellite 3 et la came 9 en évitant tout mouvement de la came 9 et la réversibilité du mécanisme.

Bien que la description qui précède soit faite sur un mécanisme hypocycloïdal, la même utilisation du ressort 15 peut être faite sur des mécanismes épicycloïdaux, à train simple, à roue et vis tangente ou autres à partir du moment où il se produit une rotation entre deux pièces.

Bien entendu, la forme du ressort 15 peut varier. Ce ressort est, en général, réalisé en acier spécial répondant aux caractéristiques du mécanisme et aux charges qui lui sont appliquées.

## Revendications

1. Mécanisme à train hypocycloïdal pour siège de véhicule comportant un frein anti-réversible à couple différentiel, dans lequel il est prévu, devant le roulement à billes (10) logé entre, d'une part, le satellite double (3) et, d'autre part, la came de commande (9), sur la face tournée vers le flasque mobile (4) de ce roulement à billes (10), un ressort annulaire (15), caracterisé en ce que ce ressort (15) à section semi-circulaire comporte une de ses extrémités (15a) recourbées qui est accrochée dans une alvéole (16) de la came (9) créée sur l'un des axes de centrage du mécanisme à train hypocycloïdal tandis que l'autre extrémité extérieure (15b) du ressort est libre de façon que, lors de la rotation du mécanisme dans le sens de la descente ou de la remontée du dossier du siège, il se produise un frottement de l'extrémité extérieure (15b) du ressort (15) contre la partie interne du satellite (3) en assurant ainsi une rotation continue sans à-coups provoquant une vitesse de rotation constante du flasque mobile (4).

2. Mécanisme suivant la revendication 1, caractérisé en ce que le ressort (15) est réalisé en acier spécial.

3. Mécanisme suivant la revendication 1, caractérisé en ce que le ressort (15) est de forme symétrique à l'état de pièce primaire pour être disposé dans des mécanismes afin d'obtenir des articulations dont le mouvement sera sans à-coups lors de la descente et de la remontée du dossier.

## Claims

1. Hypocycloidal train mechanism for a vehicle seat, including a brake with anti-reversing properties and differential torque, wherein there is provided, in front of the ball bearing (10) housed between, on the one hand, the double satellite (3) and, on the other hand, the control cam (9), on the face turned toward the mobile flange (4) of this ball bearing (10), an annular spring (15), characterized in that this spring (15) with a semicircular cross-section comprises one of its ends (15a) which is curved and inserted into a cutout (16) of the cam (9) made on one of the centering axes of the hypocycloidal train mechanism, while the other end (15b) of the spring is free, so that during rotation of the mechanism in the direction bringing down or up the seat back portion, there is generated a friction of the outer end (15b) of the spring (15) on the internal portion of the satellite (3), thereby ensuring a jerk-free continuous rotation causing a constant rotation speed of the mobile flange (4).

2. Mechanism according to claim 1, characterized in that the spring (15) is made of a specialty steel.

3. Mechanism according to claim 1, characterized in that the spring (15) is of a symmetrical shape in its initial state to be placed in mechanisms so as to obtain articulations the movement of which will be jerk-free when lowering and raising the seat back portion.

## Patentansprüche

1. Hypozykloidischer Getriebemechanismus für Fahrzeugsitze mit einer nichtumkehrbaren Bremse mit differentialem Moment, in dem vor dem Kugellager (10), das zwischen einerseits dem doppelten Satelliten (3) und andererseits dem Antriebsnocken (9) angeordnet ist, auf der gegen den beweglichen Flansch (4) dieses Kugellagers (10) gelegenen Seite eine Ringfeder (15) vorgesehen ist, dadurch gekennzeichnet, daß die Feder (15) mit halbkreisförmigem Querschnitt an einem ihrer Enden (15a) gekrümmt ist, das in eine Ausnehmung (16) des Nockens (9), die auf einer der Zentrierachsen des hypozykloidischen Getriebemechanismus ausgebildet ist, eingreift, während das andere äußere Ende (15b) der Feder frei ist, so daß bei der Rotation des Mechanismus in Richtung zum Absenken oder Aufrichten der Rückenlehne des Sitzes sich eine Reibung des äußeren Endes (15b) der Feder (15) gegen das Innenteil des Satelliten (3) ergibt, um auf diese Weise eine kontinuierliche ruckfreie Rotation sicherzustellen, was eine konstante Rotationsgeschwindigkeit des beweglichen Flansches (4) erzeugt.

2. Mechanismus nach Anspruch 1, dadurch gekennzeichnet, daß die Feder (15) aus Spezialstahl hergestellt ist.

3. Mechanismus nach Anspruch 1, dadurch gekennzeichnet, daß die Feder (15) eine im Ausgangzustand symmetrische Form aufweist, damit es in Mechanismen eingesetzt werden kann, um Gelenkverbindungen zu erhalten, deren Bewegung beim Absenken oder Aufrichten der Rückenlehne ruckfrei verläuft.
